# EUROPEAN PATENT SPECIFICATION

(11) **EP 2 523 420 B1**
(45) Date of publication and mention of the grant of the patent: **19.08.2020**
(21) Application number: 12171491.9
(22) Date of filing: 07.10.2011
(51) Int. Cl.: H04L 29/06, H04W 12/04, H04W 12/10, H04W 60/00, H04W 12/00

(54) **METHOD, APPARATUS AND COMPUTER PROGRAM PRODUCT FOR SECURITY CONFIGURATION COORDINATION DURING A CELL UPDATE PROCEDURE**
VORRICHTUNG, VERFAHREN UND KOMPUTERPROGRAMMPRODUKT ZUR KOORDINATION VON SICHERHEITSKONFIGURATION WÄHREND EINER ZELLENAKTUALISIERUNG
MÉTHODE, APPAREIL ET PROGRAMME D'ORDINATEUR POUR LA COORDINATION DE LA CONFIGRATION DE SÉCURITÉ PENDANT UNE PROCÉDURE D'ACTUALISATION DE CELLULES

(30) Priority: 01.04.2011 GB 201105647; 01.04.2011 US 201113078223
(43) Date of publication of application: 14.11.2012
(62) Divisional of application: 11184417.1
(73) Proprietor: Xiaomi H.K. Limited, Wanchai (HK)
(72) Inventor: Martin, Brian, Farnham, GU9 0LY (GB); Kubota, Keiichi, Weybridge, Surrey KT13 8LP (GB)
(74) Representative: McCann, Heather Alison

(56) References cited:
- US-A1- 2003 100 291

## Description

### Field of the Invention

Embodiments of the present invention relate generally to a method, apparatus and computer program product for coordinating the security configuration of a network and a mobile terminal, and more particularly, to a method, apparatus and computer program product for providing information regarding the security configuration of a mobile terminal during a cell update procedure.

### Background of the Invention

Various security measures are employed to protect the messages exchanged between a network, such as a universal mobile telecommunications system (UMTS) terrestrial radio access network (UTRAN) and a mobile terminal so as to permit messages to be exchanged therebetween in a secure manner. Among other security measures, a security configuration may be established between the network, such as a radio network controller (RNC), and a mobile terminal that establishes the ciphering and integrity protection that is to be provided for the messages subsequently exchanged therebetween. For increased security, the security configuration may be changed from time to time. However, the security configuration must be changed in the same fashion by both the network and the mobile terminal as a mismatch in the security configurations of the network and the mobile terminal may result in a loss of service.

In order to change the security configuration, the network and the mobile terminal generally engage in a predefined signaling sequence. This signaling sequence may take some time, and indeed, may include a period of time during which the network has completed the transition to the new security configuration, but the mobile terminal has not yet completed the transition. During this time period, the mobile terminal may be awaiting an acknowledgement from the network indicating that the security configuration procedure has been completed by the network. Until the mobile terminal receives this acknowledgement, however, the change in the security configuration will not have been completed by the mobile terminal.

An exemplary method and system for synchronizing the security configuration between a mobile terminal and a network is disclosed in US2003/0100291.

In some instances, a mobile terminal may revert to the prior security configuration after the network has completed the transition to the new security configuration. This possibility is exacerbated by the time delay following the completion of the network's security configuration transition to the acknowledgement of the security configuration transition that is to be provided by the network to the mobile terminal. Although the mobile terminal may revert to the prior security configuration for various reasons, the mobile terminal may revert to the prior security configuration in an instance in which a cell update, such as a cell reselection, occurs during the transition to a new security configuration. However, the network may have already completed the transition to the new security configuration and may be unaware of the reversion of the mobile terminal to the prior security configuration. The subsequent mismatch between the security configurations of the network and the mobile terminal may thereafter disadvantageously cause a loss of signal.

Some mobile terminals may be configured to provide an information element with the cell update message affirmatively indicating that the mobile terminal has reverted to the prior security configuration. For networks that have been updated so as to recognize and respond to such an information element in the cell update message, the network may interpret a cell update message that does not include such an information element as being indicative of the mobile terminal having also completed the transition to the new security configuration. However, some mobile terminals, such as legacy or older mobile terminals, may not be configured to provide such an information element with the cell update message. As such, these mobile terminals may provide a cell update message that fails to include an information element, even in an instance in which the mobile terminal has reverted to the prior security configuration. As such, the network may be effectively left to guess as to whether the mobile terminal has not included the additional information element with the cell update message because the mobile terminal did not revert to the prior security configuration but is operating, instead, in conformance with the new security configuration or whether the mobile terminal has simply not been configured to provide the additional information element in conjunction with the cell update message. Indeed, a network that has been updated may interpret such a cell update message that lacks an information element as an indication that the mobile terminal has not reverted to the prior security configuration, but is operating in accordance with the new security configuration, even though the mobile terminal may simply not be configured to provide the additional information element regardless of the security configuration in which the mobile terminal is operating. Further, a network that has not been upgraded to recognize such information elements may automatically revert to the prior security configuration in an instance in which a cell update message, either with or without the additional information element, is received during the transition to a new security configuration. In either scenario in which the network has been updated or in which the network has not been updated, a security configuration mismatch may be created between the network and the mobile terminal which may, in turn, result in a loss of service.

In another approach, the mobile terminal may provide an indication upon connection establishment, such as radio resource control (RRC) connection establishment, that the mobile terminal will provide the additional information element in conjunction with a cell update message to indicate that the mobile terminal has reverted to the prior security configuration. Based upon this indication provided by the mobile terminal in conjunction with the connection establishment, a network, such as an RNC, may appropriately respond to the inclusion of an information element or the lack of an information element relating to the security configuration of the mobile terminal in the cell update message. In this approach, however, the network, such as the RNC, is required to determine the capability of the mobile terminal with respect to the provision of this additional information element in conjunction with the cell update procedure in that the RNC needs to check the capability of the mobile terminal as well as the contents of a received cell update message to determine which security configuration is used. Additionally, this approach may not be readily implementable previously released mobile terminals, that is, legacy mobile terminals, since the mobile terminal is required to have a new capability reporting in uplink signaling.

### Summary of the Invention

A method, apparatus and computer program product are provided in accordance with independent claims 1, 5 and 9, respectively. Various embodiments are defined in the dependent claims.

### Brief Description of the Drawings

Having thus described embodiments of the invention in general terms, reference will now be made to the accompanying drawings, which are not necessarily drawn to scale, and wherein:
Figure 1 is one example of a communication system according to an embodiment of the present invention;
Figure 2 is a block diagram of an apparatus in accordance with an example embodiment of the present invention;
Figure 3 is a flow chart illustrating operations performed by an apparatus in accordance with an example embodiment of the present invention.

### Detailed Description of the Invention

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

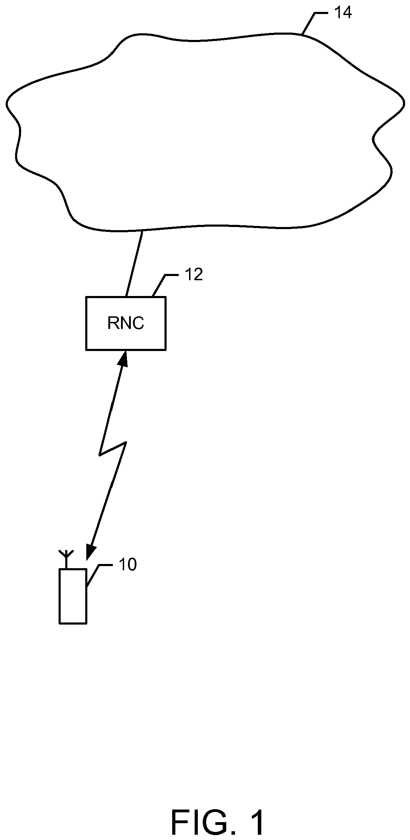

A method, apparatus and computer program product are provided for ensuring that a mobile terminal and the network, such as a radio network controller (RNC), remain synchronized in regards to the security configuration by which both the mobile terminal and the network operate. In particular, the method, apparatus and computer program product of embodiments of the present invention ensure that a mobile terminal and the network operate in accordance with the same security configuration even during a cell update, such as may be initiated by a cell reselection, by re-entering the service area (after out of service detection) or after a radio link control (RLC) unrecoverable error detection. Although the method, apparatus and computer program product may be implemented in a variety of different systems, one example of such a system is shown in Figure 1, which includes a first communication device (e.g., mobile terminal 10) that is capable of communication with a network 14 (e.g., a core network) via, for example, an RNC 12. While the network may be configured in accordance with a Universal Mobile Telecommunications System (UMTS) Terrestrial Radio Access Network (UTRAN), the network may employ other mobile access mechanisms such as Long Term Evolution (LTE), LTE-Advanced (LTE-A), wideband code division multiple access (W-CDMA), CDMA2000, global system for mobile communications (GSM), general packet radio service (GPRS) and/or the like.

The network 14 may include a collection of various different nodes, devices or functions that may be in communication with each other via corresponding wired and/or wireless interfaces. For example, the network may include one or more base stations, such as one or more node Bs, evolved node Bs (eNBs), access points or the like, each of which may serve a coverage area divided into one or more cells. The base station or other communication node could be, for example, part of one or more cellular or mobile networks or public land mobile networks (PLMNs). In turn, other devices such as processing devices (e.g., personal computers, server computers or the like) may be coupled to the mobile terminal and/or the second communication device via the network.

One or more communication terminals such as the mobile terminal 10 may be in communication with each other or other devices via the network 14. In some cases, each of the communication terminals may include an antenna or antennas for transmitting signals to and for receiving signals from a base station. In some example embodiments, the mobile terminal, also known as user equipment (UE) may be a mobile communication device such as, for example, a mobile telephone, a tablet, portable digital assistant (PDA), pager, laptop computer, or any of numerous other hand held or portable communication devices, computation devices, content generation devices, content consumption devices, universal serial bus (USB) dongles, data cards or combinations thereof. As such, the mobile terminal may include one or more processors that may define processing circuitry either alone or in combination with one or more memories. The processing circuitry may utilize instructions stored in the memory to cause the mobile terminal to operate in a particular way or execute specific functionality when the instructions are executed by the one or more processors. The mobile terminal may also include communication circuitry and corresponding hardware/software to enable communication with other devices and/or the network 14.

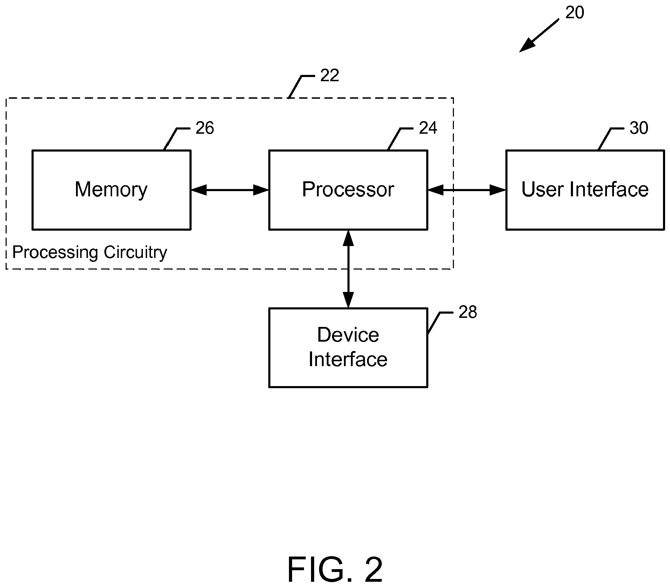

In one embodiment, for example, the mobile terminal 10 may be embodied as or otherwise include an apparatus 20 as generically represented by the block diagram of Figure 2. In this regard, the apparatus may provide information to the network 14 regarding the security configuration of the mobile terminal such that the network and the mobile terminal can maintain the same security configuration, even during a cell update procedure. While the apparatus may be employed, for example, by a mobile terminal, it should be noted that the components, devices or elements described below may not be mandatory and thus some may be omitted in certain embodiments. Additionally, some embodiments may include further or different components, devices or elements beyond those shown and described herein.

As shown in Figure 2, the apparatus 20 may include or otherwise be in communication with processing circuitry 22 that is configurable to perform actions in accordance with example embodiments described herein. In some embodiments, the apparatus or the processing circuitry may be embodied as a chip or chip set. In other words, the apparatus or the processing circuitry may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus or the processing circuitry may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 22 may include a processor 24 and memory 26 that may be in communication with or otherwise control a device interface 28 and, in some cases, a user interface 30. As such, the processing circuitry may be embodied as a circuit chip (e.g., an integrated circuit chip) configured (e.g., with hardware, software or a combination of hardware and software) to perform operations described herein. However, in some embodiments taken in the context of the mobile terminal 10, the processing circuitry may be embodied as a portion of a mobile computing device or other mobile terminal.

The device interface 28 may include one or more interface mechanisms for enabling communication with other devices and/or networks. In some cases, the device interface may be any means such as a device or circuitry embodied in either hardware, or a combination of hardware and software that is configured to receive and/or transmit data from/to a network 14 and/or any other device or module in communication with the processing circuitry 22. In this regard, the device interface may include, for example, an antenna (or multiple antennas) and supporting hardware and/or software for enabling communications with a wireless communication network and/or a communication configuration or other hardware/software for supporting communication via cable, digital subscriber line (DSL), universal serial bus (USB), Ethernet or other methods.

In an example embodiment, the memory 26 may include one or more non-transitory memory devices such as, for example, volatile and/or non-volatile memory that may be either fixed or removable. The memory may be configured to store information, data, applications, instructions or the like for enabling the apparatus 20 to carry out various functions in accordance with example embodiments of the present invention. For example, the memory could be configured to buffer input data for processing by the processor 24. Additionally or alternatively, the memory could be configured to store instructions for execution by the processor. As yet another alternative, the memory may include one of a plurality of databases that may store a variety of files, contents or data sets. Among the contents of the memory, applications may be stored for execution by the processor in order to carry out the functionality associated with each respective application. In some cases, the memory may be in communication with the processor via a bus for passing information among components of the apparatus.

The processor 24 may be embodied in a number of different ways. For example, the processor may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor may be configured to execute instructions stored in the memory 26 or otherwise accessible to the processor. As such, whether configured by hardware or by a combination of hardware and software, the processor may represent an entity (e.g., physically embodied in circuitry - in the form of processing circuitry 22) capable of performing operations according to embodiments of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the operations described herein.

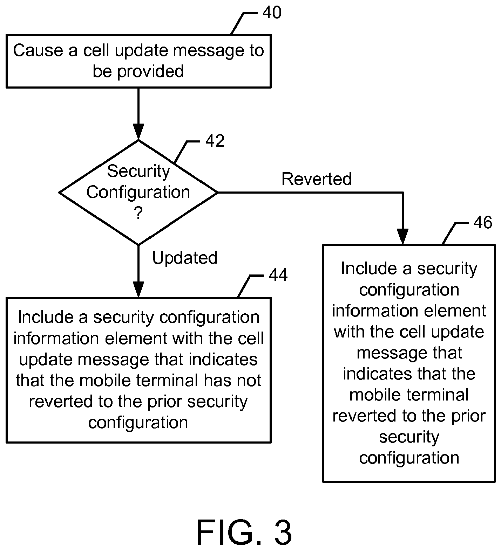

Referring now to Figure 3, a flowchart illustrating the operations performed by a method, apparatus and computer program product, such as apparatus 20 of Figure 2, in accordance with one embodiment of the present invention are illustrated. In the passages below, reference is made to functionality of the mobile terminal 10, in particular steps performed by the mobile terminal 10. It will be understood from the foregoing that these steps will be performed by one or a combination of the processing circuitry 22, the processor 24, and the device interface 28 described above with reference to Figure 2.

In accordance with embodiments of the present invention, the network 14, such as the RNC 12, and a mobile terminal 10 may have commenced a security configuration command procedure in which the security configuration, including ciphering and integrity protection, is to be updated from a prior security configuration to an updated security configuration. In this regard, the security configuration command procedure generally commences with a security configuration command being issued by the core network to the RNC and, in turn, to the mobile terminal. The mobile terminal 10 then begins the process of updating the security configuration and, once complete, reports to the RNC and, in turn, to the core network regarding the completion of the updating of the security configuration. While the core network may complete the updating of the security configuration upon receipt of the security configuration complete message from the mobile terminal, the mobile terminal does not complete the security configuration update until the mobile terminal receives an acknowledgement, such as an L2 RLC-AM ACK, from the RNC.

During and prior to completion of the security configuration command procedure or shortly after completion of the security configuration command procedure, a cell update procedure may be commenced, such as a cell reselection procedure, re-entry into a service area, an RLC unrecoverable error detection or the like. During the cell update procedure and as shown in block 40 of Figure 3, the mobile terminal 10 causes a cell update message to be provided to the network 14, such as the RNC 12. In order to ensure that both the network, including the RNC, and the mobile terminal are operating in accordance with the same security configuration, the mobile terminal may determine whether the security configuration of the mobile terminal has been updated or whether the security configuration has not yet been updated, but has remained or reverted to the prior security configuration, as indicated in block 42 of Figure 3. The mobile terminal may then apply the updated security configuration prior to provision of the cell update message, such as in instances in which the mobile terminal receives the acknowledgement, such as an L2 RLC-AM ACK, from the RNC prior to commencement of the cell update procedure. The mobile terminal may also include means, such as the processing circuitry, the processor or the like, for reverting to the prior security configuration prior to provision of the cell update message, such as in instances in which the mobile terminal has not received the acknowledgement, such as an L2 RLC-AM ACK, from the RNC prior to commencement of the cell update procedure.

In an instance in which the security configuration has been updated by the mobile terminal 10, such as in an instance in which an acknowledgement, such as an L2 RLC-AM ACK, is received by the mobile terminal from the RNC 12 prior to commencement of the cell update procedure, the mobile terminal may include a security configuration information element with the cell update message, as indicated in block 44 of Figure 3. In this instance, the security configuration information element may indicate that the mobile terminal has applied an updated security configuration, such as by indicating in one embodiment that the mobile terminal has not reverted to the prior security configuration. Conversely, in an instance in which the mobile terminal has reverted to the prior security configuration, such as in an instance in which the mobile terminal has not received the acknowledgement, such as an L2 RLC-AM ACK, from the RNC prior to commencement of the cell update procedure, the mobile terminal may include a security configuration information element, albeit with different content or information, with the cell update message, as indicated in block 46 of Figure 3. In this instance, the security configuration information element may indicate that the mobile terminal has reverted to the prior security configuration.

Based upon the content of the security configuration information element with the cell update message, the network 14, such as the RNC 12, may readily determine the security configuration of the mobile terminal 10. In particular, in an instance in which the cell update message includes a security configuration information element indicating that the mobile terminal has applied an updated security configuration, the network, such as the RNC, may determine that the mobile terminal has applied the updated security configuration. As such, the network, such as the RNC, may similarly apply the updated security configuration such that subsequent communications with the mobile terminal may be conducted in accordance with the updated security configuration. Conversely, in an instance in which the cell update message includes a security configuration information element indicating that the mobile terminal has reverted to the prior security configuration, the network, such as the RNC, may determine that the mobile terminal has reverted to the prior security configuration. As such, the network, such as the RNC, may similarly revert to the prior security configuration such that subsequent communications with the mobile terminal may be conducted in accordance with the prior security configuration. In either instance, the mobile terminal and the network, including the RNC, may thereafter have matching security configurations while avoiding security mismatches that might otherwise lead to the loss of service.

By including a security configuration information element with the cell update message that expressly indicates whether the mobile terminal: (i) has applied an updated security configuration, such as by not reverting to a prior security configuration, or (ii) has reverted to the prior security configuration, the mobile terminal and the network 14 do not suffer from inter-operability issues in situations in which only one of the mobile terminal or the network have implemented embodiments of the present invention. Indeed, the network is not left in a position to guess as to the mobile terminal's security configuration in an instance in which the cell update message failed to include an information element since the express provision of the security configuration information element in either instance provides surety in the determination made by the network. Additionally, the network may advantageously process these messages received from all mobile terminals, including both legacy or older mobile terminals and more recent releases of the mobile terminal, in the same fashion, thereby simplifying the network implementation.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method performed by a network apparatus of a telecommunications network (14), the method comprising:
receiving a cell update message provided by a mobile terminal (10) during performance of a cell update procedure;
determining that the mobile terminal (10) has applied an updated security configuration in an instance in which the cell update message includes a security configuration information element indicating that the mobile terminal has applied the updated security configuration; and
determining that the mobile terminal (10) has reverted to a prior security configuration in an instance in which the cell update message includes the security configuration information element indicating that the mobile terminal has reverted to the prior security configuration.

2. A method according to claim 1, wherein the security configuration information element indicating that the mobile terminal (10) has applied an updated security configuration comprises the security configuration information element indicating that the mobile terminal has not reverted to the prior security configuration.

3. A method according to any preceding claim, wherein the cell update message is received after completion of a cell reselection procedure.

4. A method according to any preceding claim, wherein the method further comprises:
determining that the mobile terminal (10) is not configured to report its security configuration in an instance in which the cell update message fails to include the security configuration information element.

5. A network apparatus for use in a telecommunications network (14), the network apparatus comprising a processing system arranged to:
receive a cell update message provided by a mobile terminal (10) during performance of a cell update procedure;
determine that the mobile terminal has applied an updated security configuration in an instance in which the cell update message includes a security configuration element indicating that the mobile terminal (10) has applied the updated security configuration; and
determine that the mobile terminal (10) has reverted to a prior security configuration in an instance in which the cell update message includes a security configuration element indicating that the mobile terminal (10) has reverted to the prior security configuration.

6. A network apparatus according to claim 5, wherein the security configuration information element indicating that the mobile terminal has applied an updated security configuration comprises the security configuration information element indicating that the mobile terminal has not reverted to the prior security configuration.

7. A network apparatus according to claim 5 or claim 6, wherein the processing system is arranged to receive the cell update message after completion of a cell reselection procedure.

8. A network apparatus according to any one of claims 5 to 7, wherein the processing system is arranged to:
determine that the mobile terminal (10) is not configured to report its security configuration in an instance in which the cell update message fails to include the security configuration information element.

9. A computer program product comprising at least one computer-readable storage medium having computer-executable program code instructions stored therein, the computer-executable program code instructions comprising program code instructions which when executed by a network apparatus of a telecommunications network (14) cause the network apparatus to:
receive a cell update message provided by a mobile terminal (10) during performance of a cell update procedure;
determine that the mobile terminal (10) has applied an updated security configuration in an instance in which the cell update message includes a security configuration element indicating that the mobile terminal has applied the updated security configuration; and
determine that the mobile terminal (10) has reverted to a prior security configuration in an instance in which the cell update message includes the security configuration element indicating that the mobile terminal (10) has reverted to a prior security configuration.

10. A computer program product according to claim 9, wherein the security configuration information element indicating that the mobile terminal (10) has applied an updated security configuration comprises the security configuration information element indicating that the mobile terminal has not reverted to the prior security configuration.

11. A computer program product according to claim 9 or claim 10, wherein the computer-executable program code instructions further comprise program code instructions which when executed by the network apparatus cause the network apparatus to:
determine that the mobile terminal (10) is not configured to report its security configuration in an instance in which the cell update message fails to include the security configuration information element.

## Patentansprüche

1. Verfahren, das von einer Netzwerkvorrichtung eines Telekommunikationsnetzwerks (14) durchgeführt wird, das Verfahren Folgendes umfassend:
Empfang einer Zellaktualisierungsnachricht, die von einem mobilen Endgerät (10) während der Durchführung eines Zellaktualisierungsvorgangs bereitgestellt wird;
Bestimmen, dass das mobile Endgerät (10) eine aktualisierte Sicherheitskonfiguration in einem Fall angewendet hat, in dem die Zellenaktualisierungsnachricht ein Sicherheitskonfigurations-Informationselement umfasst, das anzeigt, dass das mobile Endgerät die aktualisierte Sicherheitskonfiguration angewendet hat; und
Bestimmen, dass das mobile Endgerät (10) zu einer früheren Sicherheitskonfiguration zurückgekehrt ist, und zwar in einem Fall, in dem die Zellenaktualisierungsnachricht das Sicherheitskonfigurations-Informationselement umfasst, das anzeigt, dass das mobile Endgerät zu der früheren Sicherheitskonfiguration zurückgekehrt ist.

2. Verfahren nach Anspruch 1, wobei das Sicherheitskonfigurations-Informationselement, das anzeigt, dass das mobile Endgerät (10) eine aktualisierte Sicherheitskonfiguration angewendet hat, das Sicherheitskonfigurations-Informationselement umfasst, das anzeigt, dass das mobile Endgerät nicht zu der vorherigen Sicherheitskonfiguration zurückgekehrt ist.

3. Verfahren nach einem beliebigen vorhergehenden Anspruch, wobei die Zellaktualisierungsnachricht nach Abschluss eines Zellwiederauswahlverfahrens empfangen wird.

4. Verfahren nach einem beliebigen vorhergehenden Anspruch, das Verfahren ferner Folgendes umfassend:
Bestimmen, dass das mobile Endgerät (10) nicht dafür konfiguriert ist, seine Sicherheitskonfiguration in einem Fall zu melden, in dem die Zellenaktualisierungsnachricht das Sicherheitskonfigurations-Informationselement nicht umfasst.

5. Netzwerkvorrichtung zur Verwendung in einem Telekommunikationsnetzwerk (14), wobei die Netzwerkvorrichtung ein Verarbeitungssystem umfasst, das für folgende Zwecke ausgelegt ist:
Empfangen einer Zellaktualisierungsnachricht, die von einem mobilen Endgerät (10) während der Durchführung eines Zellaktualisierungsvorgangs bereitgestellt wird;
Bestimmen, dass das mobile Endgerät eine aktualisierte Sicherheitskonfiguration in einem Fall angewendet hat, in dem die Zellenaktualisierungsnachricht ein Sicherheitskonfigurationselement umfasst, das anzeigt, dass das mobile Endgerät (10) die aktualisierte Sicherheitskonfiguration angewendet hat; und
Bestimmen, dass das mobile Endgerät (10) zu einer früheren Sicherheitskonfiguration zurückgekehrt ist, in einem Fall, in dem die Zellenaktualisierungsnachricht ein Sicherheitskonfigurationselement umfasst, das anzeigt, dass das mobile Endgerät (10) zu der früheren Sicherheitskonfiguration zurückgekehrt ist.

6. Netzwerkvorrichtung nach Anspruch 5, wobei das Sicherheitskonfigurations-Informationselement, das anzeigt, dass das mobile Endgerät eine aktualisierte Sicherheitskonfiguration angewendet hat, das Sicherheitskonfigurations-Informationselement umfasst, das anzeigt, dass das mobile Endgerät nicht zu der vorherigen Sicherheitskonfiguration zurückgekehrt ist.

7. Netzwerkvorrichtung nach Anspruch 5 oder Anspruch 6, wobei das Verarbeitungssystem so eingerichtet ist, dass es die Zellaktualisierungsnachricht nach Abschluss eines Zellwiederauswahlvorgangs empfängt.

8. Netzwerkvorrichtung nach einem der Ansprüche 5 bis 7, wobei das Verarbeitungssystem für folgende Zwecke eingerichtet ist:
Bestimmen, dass das mobile Endgerät (10) nicht dafür konfiguriert ist, seine Sicherheitskonfiguration in einem Fall zu melden, in welchem die Zellaktualisierungsnachricht das Sicherheitskonfigurations-Informationselement nicht umfasst.

9. Computerprogrammprodukt, das mindestens ein computerlesbares Speichermedium mit darin gespeicherten computerausführbaren Programmcodebefehlen umfasst, wobei die computerausführbaren Programmcodebefehle Programmcodebefehle umfassen, die bei ihrer Ausführung durch eine Netzwerkvorrichtung eines Telekommunikationsnetzwerks (14) die Netzwerkvorrichtung zu Folgendem veranlassen:
Empfangen einer Zellaktualisierungsnachricht, die von einem mobilen Endgerät (10) während der Durchführung eines Zellaktualisierungsvorgangs bereitgestellt wird;
Bestimmen, dass das mobile Endgerät (10) eine aktualisierte Sicherheitskonfiguration in einem Fall angewendet hat, in dem die Zellenaktualisierungsnachricht ein Sicherheitskonfigurationselement umfasst, das anzeigt, dass das mobile Endgerät die aktualisierte Sicherheitskonfiguration angewendet hat; und
Bestimmen, dass das mobile Endgerät (10) zu einer früheren Sicherheitskonfiguration zurückgekehrt ist, in einem Fall, in dem die Zellenaktualisierungsnachricht das Sicherheitskonfigurationselement umfasst, das anzeigt, dass das mobile Endgerät (10) zu einer früheren Sicherheitskonfiguration zurückgekehrt ist.

10. Computerprogrammprodukt nach Anspruch 9, wobei das Sicherheitskonfigurations-Informationselement, das anzeigt, dass das mobile Endgerät (10) eine aktualisierte Sicherheitskonfiguration angewendet hat, das Sicherheitskonfigurations-Informationselement umfasst, das anzeigt, dass das mobile Endgerät nicht zu der vorherigen Sicherheitskonfiguration zurückgekehrt ist.

11. Computerprogrammprodukt nach Anspruch 9 oder Anspruch 10, wobei die computerausführbaren Programmcodebefehle ferner Programmcodebefehle umfassen, die bei ihrer Ausführung durch die Netzwerkvorrichtung die Netzwerkvorrichtung zu Folgendem veranlassen:
Bestimmen, dass das mobile Endgerät (10) nicht dafür konfiguriert ist, seine Sicherheitskonfiguration in einem Fall zu melden, in welchem die Zellaktualisierungsnachricht das Sicherheitskonfigurations-Informationselement nicht umfasst.

## Revendications

1. Procédé exécuté par un appareil de réseau d'un réseau de télécommunications (14), le procédé comprenant :
la réception d'un message de mise à jour de cellule fourni par un terminal mobile (10) pendant l'exécution d'une procédure de mise à jour de cellule ;
la détermination selon laquelle le terminal mobile (10) a appliqué une configuration de sécurité mise à jour dans une instance dans laquelle le message de mise à jour de cellule comporte un élément d'information de configuration de sécurité indiquant que le terminal mobile a appliqué la configuration de sécurité mise à jour ; et
la détermination selon laquelle le terminal mobile (10) est retourné à une configuration de sécurité antérieure dans une instance dans laquelle le message de mise à jour de cellule comporte l'élément d'information de configuration de sécurité indiquant que le terminal mobile est retourné à la configuration de sécurité antérieure.

2. Procédé selon la revendication 1, dans lequel l'élément d'information de configuration de sécurité indiquant que le terminal mobile (10) a appliqué une configuration de sécurité mise à jour comprend l'élément d'information de configuration de sécurité indiquant que le terminal mobile n'est pas retourné à la configuration de sécurité antérieure.

3. Procédé selon une revendication précédente, dans lequel le message de mise à jour de cellule est reçu à l'issue d'une procédure de resélection de cellule.

4. Procédé selon une revendication précédente, le procédé comprenant en outre :
la détermination selon laquelle le terminal mobile (10) n'est pas configuré pour signaler sa configuration de sécurité dans une instance dans laquelle le message de mise à jour de cellule n'inclut pas l'élément d'information de configuration de sécurité.

5. Appareil de réseau destiné à être utilisé dans un réseau de télécommunications (14), l'appareil de réseau comprenant un système de traitement conçu pour :
recevoir un message de mise à jour de cellule fourni par un terminal mobile (10) pendant l'exécution d'une procédure de mise à jour de cellule ;
déterminer que le terminal mobile a appliqué une configuration de sécurité mise à jour dans une instance dans laquelle le message de mise à jour de cellule comporte un élément de configuration de sécurité indiquant que le terminal mobile (10) a appliqué la configuration de sécurité mise à jour ; et
déterminer que le terminal mobile (10) est retourné à une configuration de sécurité antérieure dans une instance dans laquelle le message de mise à jour de cellule comporte un élément de configuration de sécurité indiquant que le terminal mobile (10) est retourné à la configuration de sécurité antérieure.

6. Appareil de réseau selon la revendication 5, dans lequel l'élément d'information de configuration de sécurité indiquant que le terminal mobile a appliqué une configuration de sécurité mise à jour comprend l'élément d'information de configuration de sécurité indiquant que le terminal mobile n'est pas retourné à la configuration de sécurité antérieure.

7. Appareil de réseau selon la revendication 5 ou 6, dans lequel le système de traitement est conçu pour recevoir le message de mise à jour de cellule à l'issue d'une procédure de resélection de cellule.

8. Appareil de réseau selon l'une quelconque des revendications 5 à 7, dans lequel le système de traitement est conçu pour :
déterminer que le terminal mobile (10) n'est pas configuré pour signaler sa configuration de sécurité dans une instance dans laquelle le message de mise à jour de cellule n'inclut pas l'élément d'information de configuration de sécurité.

9. Produit de programme informatique comprenant au moins un support de stockage lisible par ordinateur, sur lequel sont stockées des instructions de code de programme exécutables par ordinateur, les instructions de code de programme exécutables par ordinateur comprenant des instructions de code de programme qui, lorsqu'elles sont exécutées par un appareil de réseau d'un réseau de télécommunications (14) amènent l'appareil de réseau à :
recevoir un message de mise à jour de cellule fourni par un terminal mobile (10) pendant l'exécution d'une procédure de mise à jour de cellule ;
déterminer que le terminal mobile (10) a appliqué une configuration de sécurité mise à jour dans une instance dans laquelle le message de mise à jour de cellule comporte un élément de configuration de sécurité indiquant que le terminal mobile a appliqué la configuration de sécurité mise à jour ; et
déterminer que le terminal mobile (10) est retourné à une configuration de sécurité antérieure dans une instance dans laquelle le message de mise à jour de cellule comporte l'élément de configuration de sécurité indiquant que le terminal mobile (10) est retourné à une configuration de sécurité antérieure.

10. Produit de programme informatique selon la revendication 9, dans lequel l'élément d'information de configuration de sécurité indiquant que le terminal mobile (10) a appliqué une configuration de sécurité mise à jour comprend l'élément d'information de configuration de sécurité indiquant que le terminal mobile n'est pas retourné à la configuration de sécurité antérieure.

11. Produit de programme informatique selon la revendication 9 ou la revendication 10, dans lequel les instructions de code de programme exécutables par ordinateur comprennent en outre des instructions de code de programme qui, lorsqu'elles sont exécutées par l'appareil de réseau, amènent l'appareil de réseau à :
déterminer que le terminal mobile (10) n'est pas configuré pour signaler sa configuration de sécurité dans une instance dans laquelle le message de mise à jour de cellule n'inclut pas l'élément d'information de configuration de sécurité.
